Europäisches Patentamt

European Patent Office

Office européen des brevets

(19)

(11) **EP 1 139 470 A1**

(12) **EUROPEAN PATENT APPLICATION**
published in accordance with Art. 158(3) EPC

(43) Date of publication:
**04.10.2001 Bulletin 2001/40**

(21) Application number: **99923916.3**

(22) Date of filing: **04.06.1999**

(51) Int Cl.$^7$: **H01M 4/86**, H01M 8/10,
H01M 4/64

(86) International application number:
**PCT/JP99/03005**

(87) International publication number:
**WO 00/30195 (25.05.2000 Gazette 2000/21)**

(84) Designated Contracting States:
**DE ES FR GB IT SE**

(30) Priority: **16.11.1998 JP 32526498**

(71) Applicant: **TORAY INDUSTRIES, INC.**
**Tokyo 103-8666 (JP)**

(72) Inventors:
• **INOUE, Mikio**
**Otsu-shi Shiga 520-0842 (JP)**

• **NAKAE, Takeji**
**Otsu-shi Shiga 520-2132 (JP)**

(74) Representative: **Weber, Joachim, Dr.**
**Hoefer, Schmitz, Weber & Partner**
**Patentanwälte**
**Gabriel-Max-Strasse 29**
**81545 München (DE)**

(54) **POROUS CONDUCTIVE SHEET AND METHOD FOR PRODUCING THE SAME**

(57)    A porous conductive sheet comprising at least inorganic electrically conductive fibers and inorganic electrically conductive particles, wherein the inorganic electrically conductive particles are flexible. A porous conductive sheet, wherein the inorganic electrically conductive particles are expanded graphite.

The porous conductive sheet is less likely to cause its members to be damaged or to come off in the step of forming the sheet or in the process of assembling the sheet into a cell, than the conventional porous conductive sheets. It is also lower in production cost.

EP 1 139 470 A1

**Description**

Technical Field

The invention relates to a porous conductive sheet and a method for producing the same. The porous conductive sheet can be preferably used as an electrode member that is required to have both gas permeability and electric conductivity. This porous conductive sheet can be especially preferably used as a current collector in a polymer electrolyte fuel cell.

Background Art

A current collector of a fuel cell is required to have the function of allowing the materials participating in the electrode reaction to be diffused and permeate, in addition to the function of collecting the electric current.

Such current collectors of fuel cells are disclosed in JP 06-020710 A, JP 07-326362 A and JP 07-220735 A. The current collectors disclosed in these documents comprise respectively a porous carbon plate made of short carbon fibers bound with carbon.

The process for producing such a current collector composed of a porous carbon plate comprises steps of forming an aggregate of short carbon fibers or precursor fibers thereof, depositing a resin on the aggregate of short fibers, and baking the aggregate of short fibers having a resin deposited.

The current collector produced by this production process has a low density. So, it has a problem that the binding carbon of the current collector is likely to be destroyed when pressurized in the process of producing an electrode and when pressurized in the process of assembling into a cell.

Furthermore, this production process has a problem that the production cost is too high to produce an inexpensive current collector.

As a method for solving the problem of production cost, JP 07-105957 A or JP 08-007897 A proposes to use a paper-like carbon fiber aggregate produced from short carbon fibers, as a material for constituting a current collector. However, this current collector has a disadvantage that the electric resistance in the thickness direction is high.

As a method for improving the electric resistance in the thickness direction, WO 9827606 proposes a method of adding an electrically conductive filler to a fiber aggregate formed as a non-woven fabric, and discloses that particles of carbon black, graphite or boron carbide can be preferably used as the filler.

However, carbon black particles are likely to come off or run out to leave from the fiber aggregate, since the particle size is very small. If a material for binding the carbon black particles is added in a large quantity for preventing the leaving, the electric resistance becomes high. Graphite particles or boron carbide particles are likely to leave from the fiber aggregate when the fiber aggregate is pressurized, since they are hard. Furthermore, the contact area between the particles and the fibers is so small as to raise the electric resistance.

It is demanded to develop a current collector that is not only good in the function of collecting the electric current and in the function of allowing the materials participating in the electrode reaction to be diffused and permeate, but also unlikely to be damaged in the current collector production process and in the process till the current collector is installed in the cell, i.e., good in handling convenience, and also low in electric resistance. It is also desired that such a current collector can be produced at a low cost.

Disclosure of the invention

The object of the invention is to solve the above-mentioned problems of current collectors in the prior art.

The object of the invention is to provide an inexpensive porous conductive sheet unlikely to allow any component to come off during production and use, unlikely to be broken even if mechanical force acts, and low in electric resistance, and also to provide a production method thereof.

The inventors studied and found that the object could be achieved by using expanded graphite particles as inorganic electrically conductive particles constituting the porous conductive sheet.

The expanded graphite particles refer to the graphite particles obtained by converting graphite particles into an interlaminar compound using, for example, sulfuric acid or nitric acid, and quickly heating for expanding it. Usually the interlaminar distance in the crystal structure of expanded graphite particles is about 50 to 500 times that of the raw graphite particles.

A porous conductive sheet, i.e., a gas permeable electrically conductive sheet, in which some or all of the inorganic electrically conductive particles are expanded graphite particles, is not known hitherto.

Expanded graphite particles per se can be highly deformed. This nature can be expressed by a word, flexibility. This flexibility can be observed as the form adaptability of the expanded graphite particles to another body that exists adjacently to the expanded graphite particles.

This form adaptability can be observed when any pressurization acting on the expanded graphite particles at least partially overlying on each other makes the particles deformed mutually and bonded to each other at least partially depending on the pressurizing state.

Furthermore, this form adaptability can also be observed in the following case. That is, when the expanded graphite particles and an auxiliary material (for example, conventionally used inflexible inorganic electrically conductive particles such as carbon black or conventionally used inorganic electrically conductive fibers such as carbon fibers) used in the case where the expanded graphite particles are arranged like a sheet in such a state as to retain the gas permeability are co-pressurized, the expanded graphite particles are deformed along the external forms of the auxiliary material and bonded to the auxiliary material.

In the observation of the flexibility or form adaptability of expanded graphite particles and the porous conductive sheet formed by using the expanded graphite particles, it can be understood that the object of the invention can be achieved if the inorganic electrically conductive particles used to form the porous conductive sheet are flexible particles.

The porous conductive sheet of the invention for achieving the object of the invention can be provided in either of the following cases.

The first case:

A porous conductive sheet, comprising flexible inorganic electrically conductive particles disposed to form a sheet.

The second case:

A porous conductive sheet, comprising expanded graphite particles disposed to form a sheet.

In either of these cases, for ensuring that the flexible inorganic electrically conductive particles are preferably disposed to form a sheet, the conventional methods for forming porous conductive sheets can be applied. A typical example is to use a sheet-like substrate composed of inorganic electrically conductive fibers for supporting the flexible inorganic electrically conductive particles while retaining the gas permeability of the sheet.

The method for producing the porous conductive sheet of the invention comprises steps of forming a sheet comprising inorganic electrically conductive fibers and flexible inorganic electrically conductive particles (expanded graphite particles) and pressurizing the formed sheet in the direction perpendicular to the sheet surface.

The Best Modes for Carrying Out the Invention

The porous conductive sheet has porosity to such an extent as to allow gas permeation in the thickness direction.

As the gas permeability of the sheet in the thickness direction, it is preferable that the pressure loss in the case where air is caused to permeate at 14 cm/sec in the thickness direction in the state where no pressure (face pressure) acts on the sheet surface in the thickness direction is 40 mm Aq or less. More preferable is 15 mm Aq or less, and further more preferable is 5 mm Aq or less. If the pressure loss is large, sufficient gas permeation as a current collector of a fuel cell cannot be obtained.

Since both the electrically conductive fibers and the electrically conductive particles are made of inorganic materials, a current collector excellent in heat resistance, oxidation resistance and dissolving resistance can be obtained.

The inorganic electrically conductive fibers that can be preferably used include carbon fibers, metal fibers and ceramic fibers. Among them, carbon fibers and metal fibers are preferable, and especially carbon fibers are preferable. Ceramic fibers are low in electric conductivity, and metal fibers are inferior to carbon fibers since the metal can be dissolved out.

The inorganic electrically conductive particles that can be preferably used together with the flexible inorganic electrically conductive particles (expanded graphite particles) include carbon particles, metal particles and ceramic particles. Among them, carbon particles and metal particles are preferable, and carbon particles are especially preferable. Ceramic particles are low in electric conductivity, and metal particles are inferior to carbon particles since the metal can be dissolved out.

It is preferable that the electric resistivity of the inorganic electrically conductive fibers is $0.1 \ \Omega \cdot cm$ or less. More preferable is $0.01 \ \Omega \cdot cm$ or less. If the electric resistivity of the inorganic electrically conductive fibers is higher, the electric resistance of the porous conductive sheet becomes higher.

Deformation degree Dpf of flexible inorganic electrically conductive particles and inorganic electrically conductive fibers:

The lengths (thicknesses) of the flexible inorganic electrically conductive particles and inorganic electrically conductive fibers in the pressurization direction are measured. A sample, in which the particles and the fibers are overlaid in the pressurization direction, is prepared. The sample is placed between the sample holding flat faces of two indenters located in opposite to each other in the vertical direction. The indenters are actuated to pressurize the sample, and after the length (sample thickness) in the pressurization direction becomes 80% of that before pressurization, the pressurization is released. The sample is taken out, and the respective lengths of the flexible inorganic electrically conductive particles and the inorganic electrically conductive fibers in the pressurization direction after completion of pressurization are measured. Then, the decrement Lp of the length (thickness) of the flexible inorganic electrically conductive particles and the decrement Lf of the length (thickness) of the inorganic electrically conductive fibers due to the pressurization are substituted into the following formula, to obtain the deformation degree Dpf.

$$Dpf = Lf/Lp$$

It is preferable that the value of the deformation degree Dpf of the flexible inorganic electrically conductive particles and the inorganic electrically conductive fibers is 0.1 or less. More preferable is 0.03 or less, and further more preferable is 0.01 or less.

The deformation degree Dpf means that the flexible inorganic electrically conductive particles are far more likely to be deformed than the inorganic electrically conductive fibers. If the surface state of the pressurized sample is observed, it can be known that the surfaces of the flexible inorganic electrically conductive particles are deformed and recessed along the form of the inorganic electrically conductive fibers, and that inorganic electrically conductive fibers are positioned in the recesses. Thus, the form adaptability of the flexible inorganic electrically conductive particles can be observed.

This form adaptability means that the contact area between the flexible inorganic electrically conductive particles and another sheet forming material (e.g., inorganic electrically conductive fibers) adjacent to it can be increased.

This means that even if an adhesiveness imparting material and a water repellency imparting material, respectively organic materials, exist as required in the porous conductive sheet, form adaptability can be secured between those materials and the inorganic electrically conductive particles.

This state assures lowering the electric resistance of the porous conductive sheet, preventing the flexible inorganic electrically conductive particles from coming off and preventing the inorganic electrically conductive fibers from being damaged with pressurization.

The porous conductive sheet can contain inflexible inorganic electrically conductive particles such as carbon black powder, graphite powder, metal powder or ceramic powder, but it is preferable that the flexible inorganic electrically conductive particles account for 30 wt% or more of all the inorganic electrically conductive particles. More preferable is 50 wt% or more, and further more preferable is 70 wt% or more.

The form of the flexible and the inflexible inorganic electrically conductive particles can be close to spheres or rectangular parallelepipeds, or fibrous, like pills or like sheets. The inorganic electrically conductive particles can also be porous.

The porous conductive sheet of the invention can be produced according to any of known conventional porous conductive sheet production methods. Particular production methods are described later in examples.

In the case where inorganic electrically conductive particles having a diameter corresponding to 50% or more of the diameter of inorganic electrically conductive fibers are used, a method of producing at first a sheet from the inorganic electrically conductive fibers and the inorganic electrically conductive particles is preferable for obtaining a homogeneous porous conductive sheet. This production method lowers the production cost.

In the case where expanded graphite particles are used as the flexible inorganic electrically conductive particles, the expanded graphite particles per se may be used for forming a sheet, or a precursor of the expanded graphite particles may be used to form a sheet which is heated to change the precursor into expanded graphite particles. The precursor can be, for example, graphite powder treated with sulfuric acid.

The porous conductive sheet can also contain a water repellent polymer, in addition to the inorganic electrically conductive fibers and the inorganic electrically conductive particles. The water repellent polymer is a fluorine resin. Preferably used fluorine resins include polytetrafluoroethylene (PTFE), tetrafluoroethylene-hexafluoropropylene copolymer (FEP), and tetrafluoroethylene-perfluoroalkyl vinyl ether copolymers (PFA). Among them, PTFE is especially preferable.

In the case where the porous conductive sheet is used as a current collector of a fuel cell, water repellency treatment is essential, and in this case, the water repellent polymer has an effect of bonding the inorganic electrically conductive fibers and the inorganic electrically conductive particles to each other. This is useful in view of the strength and electric resistance of the sheet. PTFE, FEP and PFA are high in the water repellency and oxidation resistance that are necessary for a current collector of a fuel cell, and PTFE has an effect of keeping the electric resistance low.

It is preferable that the content of any of these water repellent polymers is 10 to 50 wt% based on the weight of the sheet. A more preferable range is 15 to 45 wt%, and a further more preferable range is 20 to 40 wt%. If the content is too small, the water repellency and sheet strength become low, and if the content is too large, the electric resistance becomes high.

As the material for imparting water repellency to the sheet, a non-polymeric material can also be used in addition to a polymeric material.

The water repellency of a sheet containing a water repellent material is evaluated in reference to the contact angle using water. It is preferable that the contact angle is 120° or more, and more preferable is 135° or more. In the case where the contact angle is low, when a water drop falls on the surface of the sheet, water is less removable from the sheet, and it is observed that the water drop is deposited. If such a sheet is used as a current collector of a fuel cell, water is accumulated on the sheet, and inhibits the diffusion of the materials participating in the electrode reaction.

The porous conductive sheet may contain an organic material or the like other than the fluorine resin for such a purpose as bonding, in addition to the inorganic electrically conductive fibers and the inorganic electrically conductive particles. The organic materials and the like that can be used in this case include, for example, adhesiveness imparting materials such as a mixture consisting of polyvinyl alcohol and polyvinyl acetate, sodium carboxylmethyl cellulose, polyethylene, polypropylene, acrylic resins, phenol resins and epoxy resins.

It is preferable that the content of the organic material or the like other than the fluorine resin contained in the porous conductive sheet in addition to the inorganic electrically conductive fibers and the inorganic electrically conductive particles is 12 wt% or less. More preferable is 8 wt% or less, and further more preferable is 4 wt% or less. If the content of the organic material or the like other than the fluorine resin contained in addition to the inorganic electrically conductive fibers and the inorganic electrically conductive particles is larger, the electric resistance of the sheet becomes higher.

It is most preferable that the porous conductive sheet substantially consists of the inorganic electrically conductive fibers and the inorganic electrically conductive particles only. In this case, "substantial" means that the content of the materials other than the inorganic electrically conductive fibers and the inorganic electrically conductive particles is 1 wt% or less. Substantially consisting of the inorganic electrically conductive fibers and the inorganic electrically conductive particles only gives the effects of enhancing the heat resistance and oxidation resistance of the porous conductive sheet and decreasing the matter dissolved out of the electrically conductive sheet.

The porous conductive sheet substantially consisting of the inorganic electrically conductive fibers and the inorganic electrically conductive particles can be produced by a method of producing the porous conductive sheet substantially from the inorganic electrically conductive fibers and the inorganic electrically conductive particles only, or by a method of removing other materials than the inorganic electrically conductive fibers and the inorganic electrically conductive particles from a produced porous conductive sheet using a solvent for dissolving out or heating, etc.

In the case where the porous conductive sheet is used as a current collector of a fuel cell, the porous conductive sheet must have water repellency. For this purpose, the porous conductive sheet must contain a water repellent material. The water repellent material used for this purpose is as described before.

It is preferable that the content of materials other than the inorganic electrically conductive fibers, the inorganic electrically conductive particles and the water repellent polymeric material in the porous conductive sheet is 8 wt% or less. More preferable is 4 wt% or less. If the content of the materials other than the inorganic electrically conductive fibers, the inorganic electrically conductive particles and the water repellent polymeric material is larger, the electric resistance of the sheet becomes higher.

It is preferable that the porous conductive sheet substantially consists of the inorganic electrically conductive fibers, the inorganic electrically conductive particles and the water repellent material only. In this case, "substantial" means that the content of the materials other than the inorganic electrically conductive fibers, the inorganic electrically conductive particles and the water repellent material is 1 wt% or less. Substantially consisting of the inorganic electrically conductive fibers, the inorganic electrically conductive particles and the water repellent material only gives effects of enhancing the heat resistance and oxidation resistance of the porous conductive sheet and decreasing the matter dissolved out of the electrically conductive sheet.

The porous conductive sheet substantially consisting of the inorganic electrically conductive fibers, the inorganic electrically conductive particles and the water repellent material only can be produced by a method of producing the porous conductive sheet substantially from the inorganic electrically conductive fibers, the inorganic electrically conductive particles and the water repellent material only, or a method of removing the materials other than the inorganic electrically conductive fibers, the inorganic electrically conductive particles and the water repellent material from a produced porous conductive sheet using a solvent for dissolving out or heating, etc.

It is preferable that the inorganic electrically conductive fibers contained in the porous conductive sheet form an aggregate with a woven fabric structure or a non-woven fabric structure for the purpose of letting the sheet keep shape retention. For obtaining the porous conductive sheet at low cost, it is preferable that the inorganic electrically conductive fibers have a non-woven fabric structure.

It is preferable that the fiber length of the inorganic electrically conductive fibers in terms of weight average is 3 mm or more. More preferable is 5 m or more. If the fiber length is too short, the shape retention of the sheet becomes poor, and to enhance the adhesion effect, a material other than the inorganic electrically conductive fibers and the inorganic electrically conductive particles must be used in a large quantity, to raise the electric resistance of the sheet.

In the case where the inorganic electrically conductive fibers have a non-woven fabric structure, it is preferable that the average fiber length is 30 mm or less for obtaining a uniform non-woven fabric structure. More preferable is 15 mm or less, and further more preferable is 9 mm or less.

It is preferable that the diameter of the inorganic electrically conductive particles is 1/2 or more of the diameter of the inorganic electrically conductive fibers. A more preferable diameter is twice or more, and a further more preferable diameter is 8 times or more.

The inorganic electrically conductive particles have a particle size distribution. It is preferable that 50 wt% or more the particles have diameters (particle size) of 3 $\mu$m and more. More preferable is 14 $\mu$m and more, and further more preferable is 50 $\mu$m and more.

In this case, the diameter of an inorganic electrically conductive particle or an inorganic electrically conductive fiber refers to the average diameter obtained from the major axis and the minor axis.

If the diameter of the inorganic electrically conductive particles is too small, more inorganic electrically conductive particles become necessary to connect the inorganic electrically conductive fibers mutually in the thickness direction, to increase the contacts between inorganic electrically conductive particles, lowering the effect of lowering the electric resistance. The flexible inorganic electrically conductive particles are not substantially destroyed or ground due to the pressure acting during pressurization treatment, sheet formation or use, but deformed to be oblate. Keeping the diameter of the flexible inorganic electrically conductive particles in the above range lowers the electric resistance of the sheet.

The form of the flexible inorganic electrically conductive particles in the porous conductive sheet are oblate, and not always flat, and may be, for example, three-dimensionally curved, since the inorganic electrically conductive fibers may be complicatedly laminated. This is a feature of the flexible inorganic electrically conductive particles.

The electric resistance R of the porous conductive sheet of the invention is measured as follows.

Two test electrode plates, each having a 50 mm wide, 200 mm long and 0.1 mm thick copper foil stuck on one side of a 50 mm wide, 200 mm long and 1.5 mm thick vitreous carbon plate having a smooth flat surface, are prepared. The two test electrode plates are placed with the vitreous carbon plates facing each other, with a substantially uniform clearance kept between them. At two ends on one side of the two test electrode plates, terminals for current are provided, and at the other two ends on the other side, terminals for voltage are provided.

A cut circular sheet with a diameter of 46 mm is inserted into the clearance and placed at the center of the two test electrode plates. The test electrode plates are moved to let a pressure of 0.98 MPa act on the placed sheet. At the terminals for current, a current of 1 A is fed to flow between the two test electrode plates. At the terminals for voltage, voltage V (V) at this moment is measured. The value of the measured voltage V is used to obtain resistance R (m$\Omega \cdot$cm$^2$) from the following formula.

$$R = V \times 2.4 \times 2.4 \times \pi \times 1000$$

where $\pi$ is the ratio of the circumference of a circle to its diameter.

It is preferable that the electric resistance of the porous conductive sheet of the invention is 100 m$\Omega \cdot$ cm$^2$ or less. More preferable is 50 m$\Omega \cdot$ cm$^2$ or less, and further more preferable is 15 m$\Omega \cdot$ cm$^2$ or less.

It is preferable that the electric resistance of the porous conductive sheet containing the water repellent fluorine resin is 150 m$\Omega \cdot$ cm$^2$ or less. More preferable is 70 m$\Omega \cdot$ cm$^2$ or less, and further more preferable is 30 m$\Omega \cdot$ cm$^2$ or less.

The thickness of the porous conductive sheet of the invention is measured as follows.

A sheet (sample) is held between two uniformly thick vitreous carbon plates having smooth surfaces used as indenters. Then, the indenters are moved to apply a uniform face pressure of 0.98 MPa on the sheet. The pressing pressure in this case is 1800 N. To ensure a uniform face pressure, one of the indenters is supported with a spherical sheet, so that the angle between the pressing surfaces of the top and bottom indenters can be changed.

The indenter clearance La formed when a pressing pressure of 1800 N is applied to the top and bottom indenters without any sample held between them and the indenter clearance Lb when the same pressure is applied with a sample held between them are measured, and the difference between both the clearances (Lb - La) is the thickness L (mm) of the sheet. The indenter clearances are measured at positions where the line passing through the central point of the indenters intersects with both the ends of the indenters using a micro displacement detector, and the mean value of the measured values is adopted as the thickness.

It is preferable that the thickness L of the porous conductive sheet of the invention is in a range of 0.03 to 0.3 mm. A more preferable range is 0.05 to 0.25 mm, and a further more preferable range is 0.07 to 0.2 mm.

If the thickness is smaller, the strength becomes lower, and when the porous conductive sheet is used as a current collector of a fuel cell, the gas permeability in the face directions becomes lower. If the thickness is larger, the electric resistance becomes higher.

It is preferable that the unit weight of the porous conductive sheet of the invention is in a range of 10 to 220 $g/m^2$. A more preferable range is 20 to 80 $g/m^2$, and a further more preferable range is 30 to 60 $g/m^2$.

If the unit weight is smaller, the strength of the sheet becomes lower, and when the sheet is used as a current collector of a fuel cell, the gas permeability in the face directions becomes lower. If the unit weight is larger, the electric resistance of the sheet becomes higher.

It is preferable that the tensile strength of the porous conductive sheet is 0.49 N/10 mm width or more. More preferable is 1.96 N/10 mm width or more, and further more preferable is 4.9 N/10 mm width or more. If the tensile strength is lower, the sheet is more likely to be damaged in the sophisticated working of making the sheet into a current collector of a fuel cell.

The porous conductive sheet of the invention is suitable as a component of a low temperature type fuel cell used in a temperature range of 300°C or lower, above all, as a current collector of a polymer electrolyte fuel cell, since it is inexpensive, low in electric resistance and unlikely to be broken with pressurization.

A current collector using the porous conductive sheet of the invention and a catalyst layer are disposed in layers, or a current collector using the porous electrolyte sheet of the invention, a catalyst layer and a polymer electrolyte film are disposed in layers, to form a unit for a fuel cell. The unit is assembled into a fuel cell, to make the fuel cell. The fuel cell is suitable as a power supply for driving a movable body such as an automobile or ship, since the current collector used in it is unlikely to be broken, low in electric resistance and inexpensive.

In the production of the porous conductive sheet of the invention, the step of pressurizing the sheet at least consisting of the inorganic electrically conductive fibers and the flexible inorganic electrically conductive particles in the direction perpendicular to the sheet surface gives an effect of bonding the flexible inorganic electrically conductive particles to the inorganic electrically conductive fibers. This increases the strength of the obtained sheet, prevents the inorganic electrically conductive particles from coming off from the sheet and keeps the electric resistance of the sheet low.

Examples

Comparative Example 1:

Short PAN carbon fibers cut to a length of 6 mm were dispersed into water and scooped on a wire cloth, to form a sheet. An emulsion composed of a mixture consisting of polyvinyl alcohol and polyvinyl acetate (1:3 as a ratio by weight) as a polymeric material for binding the short carbon fibers was deposited on the sheet, and dried, to obtain a porous conductive sheet.

The unit weight of the porous conductive sheet was 30 $g/m^2$, and the content of the polyvinyl alcohol polyvinyl acetate mixture was 22%.

Comparative Example 2:

A porous conductive sheet was obtained as described for Comparative Example 1, except that the length of the short PAN carbon fibers was 12 mm and that the content of the polyvinyl alcohol polyvinyl acetate mixture was 5%.

Comparative Example 3:

The porous conductive sheet obtained in Comparative Example 2 was heated in an inactive atmosphere at 800°C, to remove the polyvinyl alcohol polyvinyl acetate mixture.

Comparative Example 4:

A carbon fiber cloth ("Torayca" C06349B produced by Toray Industries, Inc.) was heated in an inactive atmosphere at 800°C, to remove the deposited sizing agent.

Example 1:

Expanded graphite powder (PF Powder 4 produced by Toyo Carbon K.K., bulk density 0.039 $g/cm^3$, average particle size 300 to 500 $\mu m$) was sprinkled over both the surfaces of the porous conductive sheet obtained in Comparative Example 1, to be deposited by 11.3 g/m$^2$. Then, to bond the expanded graphite powder to the sheet, the sheet was pressurized at a pressure of 098 MPa, to produce a porous conductive sheet.

Example 2:

Expanded graphite powder (PF Powder 4 produced by Toyo Carbon K.K., bulk density 0.039 g/cm$^3$, average particle size 300 to 500 μm) was sprinkled over both the surfaces of the porous conductive sheet obtained in Comparative Example 2, to be deposited by 6.5 g/m$^2$. Then, to bond the expanded graphite powder to the sheet, the sheet was pressurized at a pressure of 0.98 MPa, to produce a porous conductive sheet.

Example 3:

Expanded graphite powder (produced by Toyo Carbon K.K., bulk density 0.131 g/cm$^3$, average particle size 10 to 20 μm; this powder was obtained by once forming expanded graphite powder into a sheet with pressurization and grinding it) was dispersed in water, to prepare a dispersion. The porous conductive sheet obtained in Comparative Example 3 was immersed in the dispersion. Then, the sheet was dried to remove water, for producing a porous conductive sheet. The amount of the expanded graphite powder deposited on the sheet after drying was 35 g/m$^2$.

Example 4:

The amount of the expanded graphite powder deposited on the sheet after drying was changed to 115 g/m$^2$ in Example 3. The dried sheet was pressed at a linear pressure of 50 kg/cm using a roll press, to produce a porous conductive sheet.

Example 5:

Expanded graphite powder (produced by Toyo Carbon K.K., bulk density 0.131 g/cm$^3$, average particle size 10 to 20 μm) was dispersed into water having polyvinyl alcohol dissolved, to prepare a dispersion. The porous conductive sheet obtained Comparative Example 3 was immersed in the dispersion. Then, the sheet was dried to remove water, for producing a porous conductive sheet. The amount of the expanded graphite powder deposited on the sheet after drying was 32 g/m$^2$.

Example 6:

The porous conductive sheet obtained in Example 5 was pressed at a linear pressure of 50 kg/cm using a roll press, to produce a porous conductive sheet.

Example 7:

Expanded graphite powder (PF Powder 4 produced by Toyo Carbon K.K., bulk density 0.039 g/cm$^3$, average particle size 300 to 500 μm) was sprinkled over both the surfaces of the porous conductive sheet obtained in Comparative Example 4. Then, to bond the expanded graphite powder to the sheet, the sheet was pressurized at a pressure of 0.98 MPa, to produce a porous conductive sheet. The amount of the expanded graphite powder deposited on the sheet was 10 g/m$^2$.

Example 8:

Short PAN carbon fibers cut to a length of 12 mm and expanded graphite powder (PF Powder 4 produced by Toyo Carbon K.K., bulk density 0.039 g/cm$^2$, average particle size 300 to 500 μm) were mixed at a ratio by weight of 62:38, and the mixture was dispersed into water. The dispersion was scooped on a wire cloth, to form a sheet with the expanded graphite powder deposited on the short carbon fibers. An emulsion composed of a mixture consisting of polyvinyl alcohol and polyvinyl acetate (mixing ration 1:3) as a polymeric material for binding the short carbon fibers was deposited on the sheet, and the sheet was dried, to produce a porous conductive sheet. The content of the polyvinyl alcohol polyvinyl acetate mixture was 10% based on the amount of the dried sheet. The unit weight of the porous conductive sheet was 43 g/m$^2$.

Example 9:

Short PAN carbon fibers cut to a length of 12 mm and expanded graphite powder (PF Powder 4 produced by Toyo Carbon K.K., bulk density 0.039 g/cm$^3$, average particle size 300 to 500 μm) were mixed at a ratio by weight of 1:2, and the mixture was dispersed in a sodium carboxymethyl cellulose aqueous solution. The dispersion was scooped on a wire cloth, to form a sheet with the expanded graphite powder deposited on the short carbon fibers. The sheet was held between two sheets of filter paper and lightly pressurized. Then, the filter paper was removed, to produce a porous conductive sheet. The unit weight of the porous conductive sheet was 68 g/m$^2$, and the sodium carboxymethyl cellulose content was 1%.

Comparative Example 5:

Acetylene black powder was dispersed in water having polyvinyl alcohol dissolved. The porous conductive sheet obtained in Comparative Example 3 was coated with the dispersion. Then, the sheet was dried to remove water. The obtained sheet was pressed at a linear pressure of 50 kg/cm using a roll press, to produce a porous conductive sheet. The amount of acetylene black powder deposited on the sheet after drying was 30 g/m$^2$.
Data concerning the porous conductive sheets obtained in Examples 1 through 9 and Comparative Examples 1 through 5 are shown in Table 1.

## Table 1

| | Electrically conductive particles | Unit weight (g/m$^2$) | Ratio by weight (%) | | |
| --- | --- | --- | --- | --- | --- |
| | | | Carbon fibers | Electrically conductive particles | Binding polymer |
| Example 1 | Expanded graphite | 42 | 57 | 27 | 16 |
| Example 2 | Expanded graphite | 31 | 75 | 21 | 4 |
| Example 3 | Expanded graphite | 59 | 40 | 60 | 0 |
| Example 4 | Expanded graphite | 140 | 17 | 83 | 0 |
| Example 5 | Expanded graphite | 64 | 37 | 50 | 13 |
| Example 6 | Expanded graphite | 64 | 37 | 50 | 13 |
| Example 7 | Expanded graphite | 216 | 95 | 5 | 0 |
| Example 8 | Expanded graphite | 43 | 55 | 35 | 10 |
| Example 9 | Expanded graphite | 68 | 33 | 66 | 1 |
| Comparative Example 1 | Nil | 30 | 78 | 0 | 22 |
| Comparative Example 2 | Nil | 25 | 95 | 0 | 5 |
| Comparative Example 3 | Nil | 24 | 100 | 0 | 0 |
| Comparative Example 4 | Nil | 206 | 100 | 0 | 0 |
| Comparative Example 5 | Acetylene black | 57 | 41 | 53 | 6 |

## Table 1 (continued)

|  | Electric resistance with pressurization at 0.98 MPa ($m\Omega \cdot cm^2$) | Thickness with pressurization at 0.98 MPa (mm) | Differential pressure with air permeating at 14 cm/sec (mm Aq) |
|---|---|---|---|
| Example 1 | 32 | 0.13 | 0.5 |
| Example 2 | 20 | 0.08 | 0.4 |
| Example 3 | 7 | 0.08 | - |
| Example 4 | 5 | 0.11 | - |
| Example 5 | 31 | 0.14 | - |
| Example 6 | 16 | 0.07 | - |
| Example 7 | 22 | 0.25 | - |
| Example 8 | 51 | - | 0.6 |
| Example 9 | 11 | - | 10 |
| Comparative Example 1 | 171 | 0.12 | 0.4 |
| Comparative Example 2 | 58 | 0.08 | 0.3 |
| Comparative Example 3 | 25 | 0.08 | - |
| Comparative Example 4 | 32 | 0.24 | - |
| Comparative Example 5 | 31 | 0.13 | - |

From Examples 1 through 9 and Comparative Examples 1 through 4, it can be seen that if expanded graphite particles are added, the electric resistance can be lowered greatly. The differential pressures of the porous conductive sheets obtained in Examples 1, 2, 8 and 9 with permeating air were enough to allow the use of the sheets as current collectors of fuel cells. It can be seen that especially the porous conductive sheets obtained in Examples 1, 2 and 8 in which the weight of carbon fibers was larger than the weight of expanded graphite particles are not so different from the porous conductive sheets not containing expanded graphite in the comparative examples.

From Example 6 and Comparative Example 5, it can be seen that the effect of expanded graphite particles in lowering the electric resistance is larger than that of acetylene black particles. The reason is that the expanded graphite particles have flexibility or form adaptability.

The electric resistance of the porous conductive sheet obtained in Comparative Example 3 was as low as 25 $m\Omega \cdot cm^2$, but the porous conductive sheet obtained in Comparative Example 3 consisting of carbon fibers only was low in the shape retention of the sheet and was liable to be damaged during handling. The electric resistances of the porous conductive sheets containing a binding polymer obtained in Examples 2, 6 and 9 were lower than the electric resistance of the porous conductive sheet not containing any binding polymer obtained in Comparative Example 3, showing the effect of expanded graphite particles in lowering the electric resistance.

When the porous conductive sheet obtained in Comparative Example 3 was pressurized at 29 MPa, numerous carbon fibers were broken. On the contrary, in case of the porous conductive sheet obtained in Example 3, less carbon fibers were broken, and in the cases of the porous conductive sheets obtained in Examples 4, 5 and 6, few carbon fibers were broken. It is considered that the presence of expanded graphite particles and polyvinyl alcohol eased the concentration of pressing pressure among carbon fibers.

Example 10:

Short PAN carbon fibers cut to a length of 12 mm and expanded graphite powder (PF Powder 4 produced by Toyo Carbon K.K., bulk density 0.039 g/cm$^3$, average particle size 300 to 500 μm) were mixed at a ratio by weight of 1:1, and the mixture was dispersed into a sodium carboxymethyl cellulose aqueous solution. The dispersion was scooped on a wire cloth, to form a sheet with the expanded graphite powder deposited on the short carbon fibers. The sheet was held between two sheets of filter paper and lightly pressurized for the purpose of removing water. The filter paper was removed, and the sheet was dried. The dried sheet was pressed at a linear pressure of 50 kg/cm using a roll press, to produce a porous conductive sheet.

Examples 11, 12 and 13:

Short PAN carbon fibers cut to a length of 12 mm and expanded graphite powder (PF Powder 4 produced by Toyo Carbon K.K., bulk density 0.039 g/cm$^3$, average particle size 300 to 500 μm) were mixed at a ratio by weight of 1:1, and the mixture was dispersed into a sodium carboxymethyl cellulose aqueous solution. The dispersion was scooped on a wire cloth, to form a sheet with the expanded graphite powder deposited on the short carbon fibers. The sheet was held between two sheets of filter paper and lightly pressurized for the purpose of removing water. The filter paper was removed, and the sheet was dried. The dried sheet was pressed at a linear pressure of 50 kg/cm using a roll press, to produce a porous conductive sheet.
Furthermore, the porous conductive sheet was heat-treated in air at 200°C for 30 minutes. The heat-treated sheet was impregnated with a PTFE dispersion (Polyfuron PTFE Dispersion produced by Daikin Industries, Ltd.). The impregnated sheet was held between two sheets of filter paper and lightly pressurized. Then, the filter paper was removed from the sheet, and the sheet was dried. The dried sheet was heat-treated at 370°C for 10 minutes, while being pressurized at 12 kgf/cm$^2$, to produce a porous conductive sheet. The concentration of the PTFE dispersion used was 15% in Example 11, 20% in Example 12, and 24% in Example 13.

Example 14:

Short PAN carbon fibers cut to a length of 12 mm and expanded graphite powder (produced by Toyo Carbon K.K., bulk density 0.14 g/cm$^3$, average particle size 100 to 200 μm) were mixed at a ratio by weight of 1:1, and the mixture was dispersed into a sodium carboxymethyl cellulose aqueous solution. The dispersion was scooped on a wire cloth, to form a sheet with the expanded graphite powder deposited on the short carbon fibers. The sheet was held between two sheets of filter paper and lightly pressurized for the purpose of removing water. Then, the filter paper was removed, and the sheet was dried. The dried sheet was pressed using a roll press, to produce a porous conductive sheet. The clearance of the roll press was adjusted to 220 μm, 170 μm and 120 μm, for pressing three times.

Examples 15 and 16:

Short PAN Carbon fibers cut to a length of 12 mm and expanded graphite powder (produced by Toyo Carbon K.K., bulk density 0.14 g/cm$^3$, average particle size 100 to 200 μm) were mixed at a ratio by weight of 1:1, and the mixture was dispersed into a sodium carboxymethyl cellulose aqueous solution. The dispersion was scooped on a wire cloth, to form a sheet with the expanded graphite powder deposited on the short carbon fibers. The sheet was held between two sheets of filter paper and lightly pressurized for the purpose of removing water. Then, the filter paper was removed, and the sheet was dried. The dried sheet was pressed using a roll pressed, to produce a porous conductive sheet. In Example 15, the clearance of the roll press was adjusted to 220 μm, 170 μm and 120 μm, for pressing three times. In Example 16, the produced porous conductive sheet was not pressed using a roll press.
Furthermore, the porous conductive sheet was heat-treated in air at 200°C for 30 minutes, and impregnated with an FEP dispersion (Neofuron PTFE Dispersion produced by Daikin Industries, Ltd.). The sheet was held between two sheets of filter paper and lightly pressurized. Then, the filter paper was removed from the sheet, and the sheet was dried. The dried sheet was pressurized at 0.15 kgf/cm$^2$ while being heat-treated at 310°C for 3 hours, to produce a porous conductive sheet.

Example 17:

A porous conductive sheet was produced as described for Example 11, except that short PAN carbon fibers cut to a length of 12 mm, expanded graphite powder (produced by Toyo Carbon K.K., bulk density 0.14 g/cm$^3$, average

particle size 100 to 200 $\mu$m) and a PTFE dispersion (Polyfuron PTFE Dispersion produced by Daikin Industries, Ltd.) were used.

Examples 18 and 19

The porous conductive sheet of Example 18 was produced as described for Example 15, and the porous conductive sheet of Example 19 was produced as described for Example 16, except that short PAN carbon fibers cut to a length of 12 mm, expanded graphite powder (produced by Toyo Carbon K.K., bulk density 0.14 g/cm$^3$, average particle size 100 to 200 $\mu$m) and an FEP dispersion (Neofuron PTFE Dispersion produced by Daikin Industries, Ltd.) were used.

Example 20:

Short PAN carbon fibers cut to a length of 12 mm and expanded graphite powder (produced by Toyo Carbon K.K., bulk density 0.14 g/cm$^3$, average particle size 100 to 200 $\mu$m) were mixed at a ratio by weight of 1:1, and the mixture was dispersed into a sodium carboxymethyl cellulose. The dispersion was scooped on a wire cloth, to form a sheet with the expanded graphite powder deposited on the short carbon fibers. The sheet was held between two sheets of filter paper and lightly pressurized for the purpose of removing water. Then, the filter paper was removed, and the sheet was dried. The dried sheet was pressed using a roll press, to produce a porous conductive sheet. The clearance of the roll press was adjusted to 220 $\mu$m, 170 $\mu$m and 120 $\mu$m for pressing three times.

Furthermore, the porous conductive sheet was heat-treated in air at 200 °C for 30 minutes, and impregnated with a polyvinylidene fluoride (PVDF) N-methyl-2-pyrrolidone solution (concentration 10 wt%). The impregnated sheet was held between two sheets of filter paper and lightly pressurized. Then, from the sheet, the filter paper was removed, and the sheet was dried. The dried sheet was pressurized at 0.15 kgf/cm$^2$ while being heat-treated at 200°C for 3 hours, to produce a porous conductive sheet.

Data concerning the porous conductive sheets obtained in Examples 10 through 13 are shown in Table 2. Data concerning the porous conductive sheets obtained in Examples 14 through 16 are shown in Table 3. Data concerning the porous conductive sheets obtained in Examples 17 through 20 are shown in Table 4.

## Table 2

| | Electrically conductive particles | Unit weight (g/m²) | Ratio by weight (%) | | | |
|---|---|---|---|---|---|---|
| | | | Carbon fibers | Electrically conductive particles | Binding polymer | |
| | | | | | CMC | PTFE |
| Example 10 | Expanded graphite | 57 | 49 | 49 | 2 | 0 |
| Example 11 | Expanded graphite | 76 | 38 | 38 | 1 | 23 |
| Example 12 | Expanded graphite | 73 | 33 | 33 | 1 | 33 |
| Example 13 | Expanded graphite | 92 | 29 | 30 | 1 | 40 |

## Table 2 (continued)

| | Electric resistance with pressurization at 0.98 MPa (mΩ · cm²) | Thickness with pressurization at 0.98 MPa (mm) | Differential pressure with air permeating at 14 cm/sec. (mmAq) | Contact angle (°) |
|---|---|---|---|---|
| Example 10 | 11 | 0.095 | 1.9 | |
| Example 11 | 23 | 0.11 | 4.2 | 132 |
| Example 12 | 28 | 0.097 | 3.2 | 127 |
| Example 13 | 34 | 0.10 | 3.8 | 135 |

## Table 3

| | Electrically conductive particles | Unit weight (g/m²) | Ratio by weight (%) | | | | |
|---|---|---|---|---|---|---|---|
| | | | Carbon fibers | Electrically conductive particles | Binding polymer | | |
| | | | | | CMC | FEP | |
| Example 14 | Expanded graphite | 70 | 49 | 49 | 2 | 0 | |
| Example 15 | Expanded graphite | 86 | 37 | 37 | 1 | 25 | |
| Example 16 | Expanded graphite | 91 | 36 | 36 | 1 | 27 | |

## Table 3 (continued)

| | Electric resistance with pressurization at 0.98 MPa (mΩ · cm²) | Thickness with pressurization at 0.98 MPa (mm) | Differential pressure with air permeating at 14 cm/sec. (mmAq) |
|---|---|---|---|
| Example 14 | 13 | 0.090 | 3.2 |
| Example 15 | 54 | 0.10 | 5.1 |
| Example 16 | 86 | 0.235 | 1.4 |

**EP 1 139 470 A1**

## Table 4

| | Electrically conductive particles | Binding polymer | | Unit weight (g/m²) | Ratio by weight (%) | | | |
|---|---|---|---|---|---|---|---|---|
| | | 1 | 2 | | Carbon fibers | Electrically conductive particles | Binding polymer | |
| | | | | | | | 1 | 2 |
| Example 17 | Expanded graphite | CMC | PTFE | 80 | 31 | 47 | 1 | 21 |
| Example 18 | Expanded graphite | CMC | FEP | 64 | 37 | 55 | 1 | 7 |
| Example 19 | Expanded graphite | CMC | FEP | 84 | 31 | 47 | 1 | 21 |
| Example 20 | Expanded graphite | CMC | PVDF | 80 | 32 | 47 | 1 | 20 |

## Table 4 (continued)

| | Electric resistance with pressurization at 0.98 MPa (m$\Omega \cdot$ cm²) | Thickness with pressurization at 0.98 MPa (mm) | Differential pressure with air permeating at 14 cm/sec. (mmAq) | Tensile strength (kgf/mm width) | Contact angle (°) |
|---|---|---|---|---|---|
| Example 17 | 25 | 0.11 | 3.0 | 0.7 | 141 |
| Example 18 | 31 | 0.12 | 2.0 | | |
| Example 19 | 52 | 0.12 | 4.6 | 1.2 | 141 |
| Example 20 | 28 | 0.12 | 4.4 | 1.3 | |

Industrial Applicability

The porous conductive sheet of the invention is low in electric resistance and unlikely to cause any component of it to be broken or come off when pressurized. Components of it are little oxidized or dissolved out. The production cost is low. The porous conductive sheet of the invention is small in voltage drop and breakage and is suitable as a long life current collector of a fuel cell.

## Claims

1.   A porous conductive sheet, comprising flexible inorganic electrically conductive particles disposed to form a sheet.

2.   A porous conductive sheet according to claim 1, wherein the flexible inorganic electrically conductive particles are disposed to form a sheet, while being deposited on inorganic electrically conductive fibers.

3.   A porous conductive sheet according to claim 2, wherein the surfaces of the inorganic electrically conductive particles are recessed at the contact faces between the inorganic electrically conductive fibers and the inorganic electrically conductive particles.

4.   A porous conductive sheet according to claim 2, which includes a water repellent material.

5.   A porous conductive sheet according to claim 2, which substantially consists of the inorganic electrically conductive fibers and the inorganic electrically conductive particles only.

**6.** A porous conductive sheet according to claim 4, which substantially consists of the inorganic electrically conductive fibers, the inorganic electrically conductive particles and the water repellent material only.

**7.** A porous conductive sheet according to any one of claims 2 through 6, wherein the length of the inorganic electrically conductive fibers is 3 mm or more.

**8.** A porous conductive sheet according to any one of claims 2 through 7, wherein the diameter of the inorganic electrically conductive particles is 1/2 or more of the diameter of the inorganic electrically conductive fibers.

**9.** A porous conductive sheet according to any one of claims 2 through 8, wherein the inorganic electrically conductive fibers are carbon fibers.

**10.** A porous conductive sheet according to any one of claims 2 through 9, which has an electric resistance of 150 $m\Omega \cdot cm^2$ or less.

**11.** A porous conductive sheet according to any one of claims 2 through 10, which has a thickness of 0.03 to 0.3 mm and a unit weight of 10 to 220 $g/m^2$.

**12.** A porous conductive sheet according to any one of claims 2 through 11, which has a tensile strength of 0.49 N/10 mm width or more.

**13.** A porous conductive sheet, comprising expanded graphite particles disposed to form a sheet.

**14.** A porous conductive sheet according to claim 13, wherein the expanded graphite particles are disposed to form a sheet, while being deposited on inorganic electrically conductive fibers.

**15.** A porous conductive sheet according to claim 14, wherein the surfaces of the expanded graphite particles are recessed at the contact faces between the inorganic electrically conductive fibers and the expanded graphite particles.

**16.** A porous conductive sheet according to claim 14, which further contains a water repellent material.

**17.** A porous conductive sheet according to claim 14, which substantially consists of the inorganic electrically conductive fibers and the inorganic electrically conductive particles only.

**18.** A porous conductive sheet according to claim 16, which substantially consists of the inorganic electrically conductive fibers, the inorganic electrically conductive particles and the water repellent material only.

**19.** A porous conductive sheet according to claim 14, wherein the length of the inorganic electrically conductive fibers is 3 mm or more.

**20.** A porous conductive sheet according to claim 14, wherein the diameter of the inorganic electrically conductive particles is 1/2 or more of the diameter of the inorganic electrically conductive fibers.

**21.** A porous conductive sheet according to any one of claims 14 through 20, wherein the inorganic electrically conductive fibers are carbon fibers.

**22.** A porous conductive sheet according to any one of claims 14 through 21, which has an electric resistance of 150 $m\Omega \cdot cm^2$ or less.

**23.** A porous conductive sheet according to any one of claims 14 through 22, which has a thickness of 0.03 to 0.3 mm and a unit weight of 10 to 220 $g/m^2$.

**24.** A porous conductive sheet according to any one of claims 14 through 23, which has a tensile strength of 0.49 N/10 mm width.

**25.** A porous conductive sheet according to any one of claims 1 through 24, which is used as a current collector of a fuel cell.

**26.** A current collector for a fuel cell, comprising the use of the porous conductive sheet as set forth in any one of claims 1 through 24.

**27.** A unit for a fuel cell, comprising the current collector as set forth in claim 26, provided with a catalyst layer.

**28.** A unit for a fuel cell, comprising the current collector as set forth in claim 26, provided with a catalyst layer and a polymer electrolyte film.

**29.** A fuel cell, comprising the unit as set forth in claim 27 or 28.

**30.** A movable body, mounted with the fuel cell as set forth in claim 29.

**31.** A method for producing the porous conductive sheet as set forth in any one of claims 1 through 24, comprising the step of pressurizing the porous conductive sheet in the direction perpendicular to the surface of the sheet in the step of forming the porous conductive sheet.

## INTERNATIONAL SEARCH REPORT

| International application No. |
| --- |
| PCT/JP99/03005 |

| A. CLASSIFICATION OF SUBJECT MATTER |
| --- |
| Int.Cl⁶ H01M4/86, H01M8/10, H01M4/64 |

According to International Patent Classification (IPC) or to both national classification and IPC

| B. FIELDS SEARCHED |
| --- |
| Minimum documentation searched (classification system followed by classification symbols) |
| Int.Cl⁶ H01M4/86, H01M8/10, H01M4/64 |

| Documentation searched other than minimum documentation to the extent that such documents are included in the fields searched |
| --- |
| Jitsuyo Shinan Koho     1926-1996   Toroku Jitsuyo Shinan Koho   1994-1999 |
| Kokai Jitsuyo Shinan Koho  1971-1999   Jitsuyo Shinan Toroku Koho   1996-1999 |

| Electronic data base consulted during the international search (name of data base and, where practicable, search terms used) |
| --- |
| WPI/L |

### C. DOCUMENTS CONSIDERED TO BE RELEVANT

| Category* | Citation of document, with indication, where appropriate, of the relevant passages | Relevant to claim No. |
| --- | --- | --- |
| X | JP, 56-93265, A (Sanyo Electric Co., Ltd.), 28 July, 1981 (28. 07. 81), | 1, 13, 25-31 |
| Y | Claim 1 ; page 2, upper left column, lines 17 to 19 ; Fig. 2 (Family: none) | 2-12, 14-24 |
| Y | JP, 8-7897, A (Toyota Motor Corp.), 12 January, 1996 (12. 01. 96), Claim 1 ; Par. Nos. [0010], [0014] ; Fig. 2 (Family: none) | 2-12, 14-24 |
| A | JP, 61-32358, A (Pentel Co., Ltd.), 15 February, 1986 (15. 02. 86), Claims ; page 1, right column, lines 12 to 16 ; page 2, lower left column, lines 15, 16 (Family: none) | 1-31 |
| A | JP, 5-166513, A (Osaka Gas Co., Ltd.), 2 July, 1993 (02. 07. 93), Claims 1 to 5 ; Par. No. [0009] | 1-31 |

☐ Further documents are listed in the continuation of Box C.    ☐ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 31 August, 1999 (31. 08. 99) | 21 September, 1999 (21. 09. 99) |

| Name and mailing address of the ISA/ | Authorized officer |
| --- | --- |
| Japanese Patent Office | |
| Facsimile No. | Telephone No. |

Form PCT/ISA/210 (second sheet) (July 1992)